# EUROPEAN PATENT APPLICATION

(11) **EP 2 584 470 A1**
(43) Date of publication of application: **24.04.2013**
(21) Application number: 12188607.1
(22) Date of filing: 16.10.2012
(51) Int. Cl.: G06F 13/40

(54) **Electronic devices and electronic systems**

(30) Priority: 17.10.2011 TW 100137469
(71) Applicant: Acer Incorporated, Taipei Hsien 221 (TW)
(72) Inventor: Sip, Kim Yeung, 221 Taipei Hsien (TW)
(74) Representative: Becker Kurig Straus

(57) **Abstract**

An electronic device is provided, including a printed circuit board, a male connector and a female connector. The printed circuit board has at least one functional circuit. The male connector is coupled to the printed circuit board. The female connector is coupled to the printed circuit board and mated with the male connector, in which the electronic device is coupled to another electronic device in a daisy-chain configuration.

## Description

### CROSS REFERENCE TO RELATED APPLICATIONS

This Application claims priority of Taiwan Patent Application No.1 100137469, filed on Oct. 17, 2011, the entirety of which is incorporated by reference herein.

### BACKGROUND OF THE INVENTION

### Field of the Invention

The present invention relates to electronic systems, and in particular relates to electronic systems having high speed transmission interfaces.

### Description of the Related Art

Recently, computers and networks have made many innovative functions more effective. New peripheral devices, such as internet units and external storage units, can easily be connected to computers or notebooks. In everyday life, people use more and more peripheral devices, and the peripheral devices have different standards and special styles, such that it is not convenient for people to use the peripheral devices. In addition, it is not easy to assemble the different peripheral devices together. Thus, there is a need for an electronic device to increase convenience of usage.

### BRIEF SUMMARY OF THE INVENTION

In light of the previously described problems, the invention provides an embodiment of an electronic device, including a printed circuit board, a male connector and a female connector. The printed circuit board has at least one functional circuit. The male connector is coupled to the printed circuit board. The female connector is coupled to the printed circuit board and mated with the male connector, in which the electronic device is coupled to another electronic device in a daisy-chain configuration.

The invention also provides an electronic system, including a first electronic device and a second electronic device. The first electronic device has a first female connector, a first male connector and a first printed circuit board. The second electronic device has a second female connector, a second male connector and a second printed circuit board, in which the second male connector and the second female connector are respectively mated with the first female connector and the first male connector, such that the first printed circuit board communicates with the second printed circuit board with a daisy-chain configuration.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

FIG.1 illustrates a schematic view of an electronic system of the disclosure;

FIG. 2 illustrates an embodiment of the electronic device of the disclosure;

FIG. 3 illustrates another schematic view of the electronic system of the disclosure;

FIG. 4 illustrates another schematic view of the electronic system of the disclosure; and

FIG. 5 illustrates another schematic view of the electronic system of the disclosure.

### DETAILED DESCRIPTION OF THE INVENTION

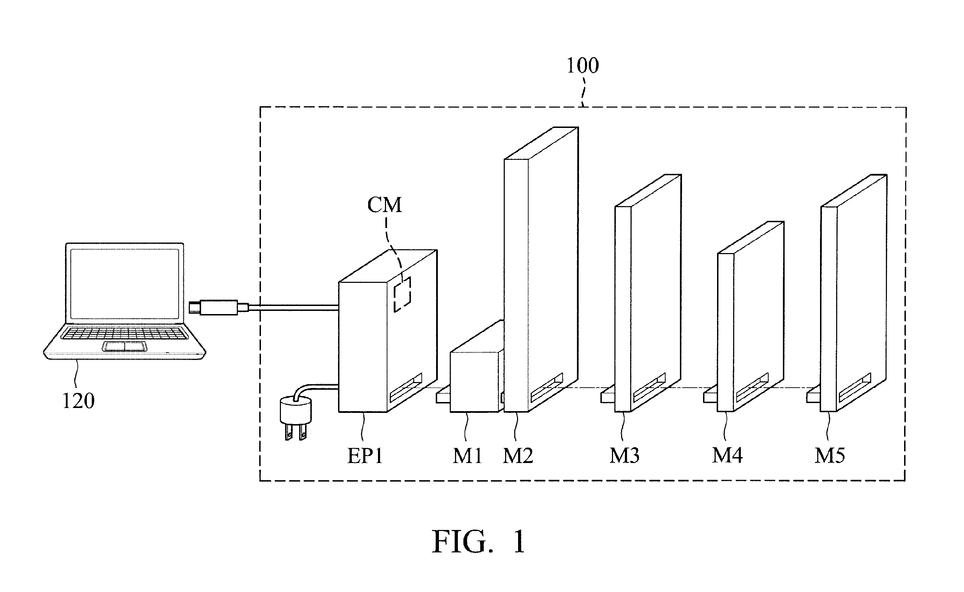

FIG.1 illustrates a schematic view of the electronic system of the disclosure. As shown in FIG. 1, an electronic system 100 has electronic devices EP1 and M1-M5, and a control module CM, in which the electronic device EP1 can be an input output expander (I/O Expander). In the embodiment, the control module CM is disposed in the electronic device EP1. In some embodiments, the control module CM can be disposed in one of the electronic devices M1∼M5 or in a host 120 coupled to the electronic system 100 through a transmission cable, but is not limited thereto. The electronic devices M1-M5 are overlapped in a direction from the electronic device EP1, and the direction is perpendicular to the surface of the electronic device EP1. In addition, each of the electronic devices EP1 and M1∼M5 has a high speed transmission interface, e.g., a thunderbolt interface, such that the electronic devices EP1 and M1-M5 use a transport protocol compatible with a thunderbolt interface to communicate with a host 120. The electronic devices EP1 and M1-M5 are coupled in a daisy-chain configuration.

In detail, in the embodiment of the invention, any of the electronic devices M1-M5 can be any of various kinds of peripheral devices. For example, the electronic device M1 can be a TV box. The electronic device M2 can be an optical disk drive. The electronic device M3 can be a hard disk driver (HDD). The electronic device M4 can be a graphics processing unit (GPU) device. The electronic device M5 can be a speaker. Note that the number and the type of the electronic devices are provided for illustration, but are not limited thereto, any electronic device having the thunderbolt interface can serve as the input/output expander EP of the invention or any of the electronic devices M1∼M5 of the invention. Because the graphics processing unit or the central processing unit may operate at high speeds to process data, the graphics processing unit or the central processing unit has to be disposed in some electronic devices having high speed transmission interfaces (e.g., more than 5Gbps). Note that, in some embodiments, the graphics processing unit or the central processing unit can be independent of the hose 120 to process data. For example, the electronic system 100, connected to a displayer and a keyboard (or a mouse), can serve as a personal computer (PC).

The electronic device EP1 can provide power to the electronic devices M1∼M5 or peripheral devices coupled to the electronic device EP1. The electronic device EP1 has a functional circuit. The functional circuit includes a bridge circuit to bridge high speed transmission interfaces (e.g., more than 5Gbps) and transmission interfaces different from the high speed transmission interfaces. The transmission interfaces, different from the high speed transmission interfaces, include high-definition multimedia interfaces (HDMI), digital visual interfaces (DVI), video graphics array (VGA), network interfaces, universal serial bus interfaces (USB) and audio interfaces, such that the peripheral devices can communicate with the host 120 or the electronic devices M1-M5 by the interfaces.

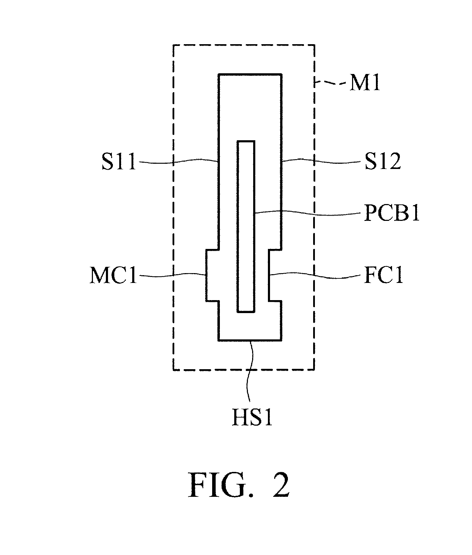

FIG. 2 illustrates an embodiment of the electronic device of the disclosure. As shown in FIG. 2, the electronic device M1 includes a printed circuit board PCB1, a male connector MC1, a female connector FC1 and a housing HS1. The printed circuit board PCB1 has at least one functional circuit. The functional circuit can be a graphics processing unit, a central processing unit, a storage unit or network unit, but is not limited, thereto. The user can selectively use the graphics processing unit and the central processing unit of the electronic system 100 or that of the host 120, or the user can use the graphics processing unit and the central processing unit of the electronic system 100 and the host 120 at the same time. The user can get on the internet by the network unit of the electronic system 100 rather than the host 120. The housing HS1 has a first side S11 and a second side S12 different from the first side S11. The male connector MC1 is disposed in a protrusion of the first side S11. The female connector FC1 is disposed in a recess of the second side S12, in which the protrusion is mated with the recess, such that the male connector MC1 and the female connector FC1 can be respectively connected to a female connector and a male connector of another electronic device (e.g., one of the electronic devices M2-M5).

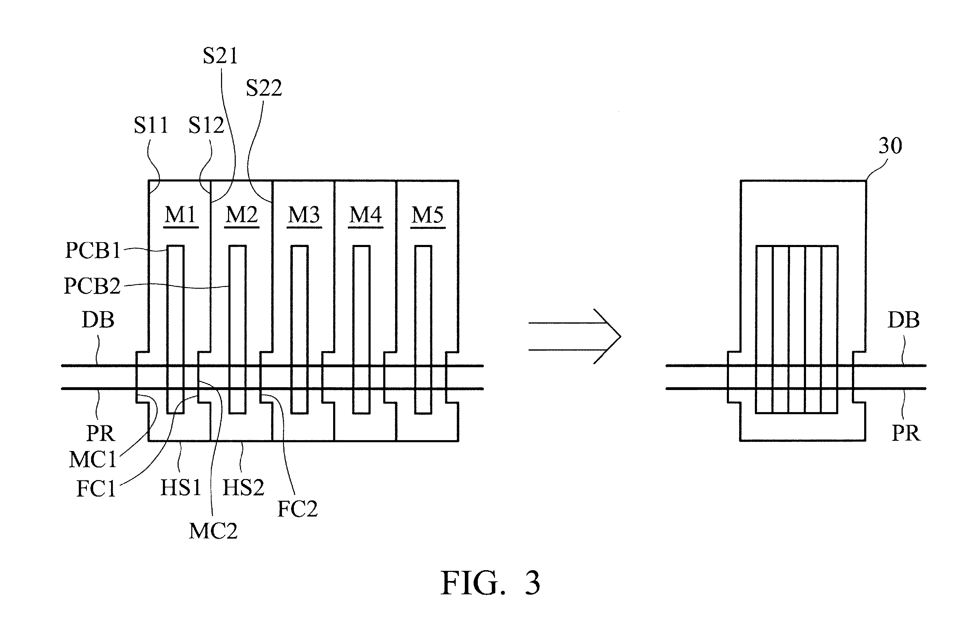

FIG. 3 illustrates another schematic view of the electronic system of the disclosure. As shown in FIG. 3, the electronic device M1 has the male connector MC1, the female connector FC1 and the printed circuit board PCB1 and the housing HS1. The electronic device M2 has the male connector MC2, the female connector FC2, the printer circuit board PCB2 and the housing HS2, in which the housing HS2 is similarly to the housing HS1. The housing HS2 has a first side S21 and a second side S22 different from the first side S21. In addition, the electronic devices M3-M5 have the same devices. Therefore, the illustration of the same features of the same devices is omitted for brevity. The protrusion of the first side S21 is mated with the recess of the second side S12, and the male connector MC2 and the female connector FC2 are respectively mated with the female connector FC1 and the male connector MC1. When the electronic device M1 is connected to the electronic device M2, the second side S12 of the housing HS1 and the first side S21 of the housing HS2 are face to face, such that the female connector FC1, disposed in the recess of the second side S12, is electrically connected to the male connector MC2 disposed in the protrusion of the first side S21, thereby the printed circuit board PCB1 communicates with the printed circuit board PCB2 in a daisy-chain configuration. The electronic devices M1-M5, connected in serial, forms the electronic device set 30 to serially connect the data lines together and to serially connect the power lines of the electronic devices together, so that the data bus DB and the power rail PR are formed. The electronic devices M1-M5 can receive power from the electronic device EP1 through the power rail PR and transmit data through the data bus DB.

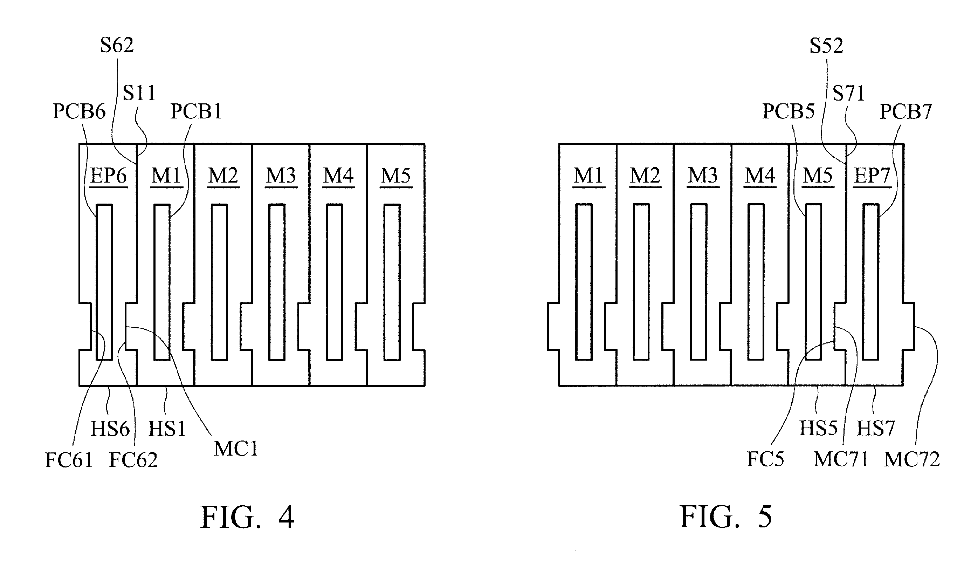

FIG. 4 illustrates another schematic view of the electronic system of the disclosure. As shown in FIG. 4, the electronic device EP6 has the female connectors FC61 and FC62, the printed circuit board PCB6 and the housing HS6. The protrusion of the first side S11 is mated with the recess of the second side S62 of the electronic device EP6, and the male connector MC1 is mated with the female connectors FC61 and FC62. When the electronic device EP6 is connected to the electronic device M1, the second side S62 of the housing HS6 and the first side S11 of the housing HS1 are face to face, such that the female connector FC62, disposed in the recess of the second side S62, is electrically connected to the male connector MC1 disposed in the protrusion of the first side S11, thereby the printed circuit board PCB6 communicates with the printed circuit board PCB1 in a daisy-chain configuration. Therefore, the electronic devices M1-M5 can communicate with the host 120 through the electronic device EP6.

FIG. 5 illustrates another schematic view of the electronic system of the disclosure. As shown in FIG. 5, the electronic device EP7 has the male connectors MC71 and MC72, the printed circuit board PCB7 and the housing HS7. The recess of the second side S52 of the electronic device M5 is mated with the recess of the first side S71 of the electronic device EP7, and the female connector FC5 is mated with the male connectors MC71 and MC72. When the electronic device EP7 is connected to the electronic device M5, the first side S71 of the housing HS7 and the second side S52 of the housing HS5 are face to face, such that the female connector FC5, disposed in the recess of the second side S52, is electrically connected to the male connector MC7 disposed in the protrusion of the first side S71, thereby the printed circuit board PCB5 communicates with the printed circuit board PCB7 in a daisy-chain configuration. Therefore, the electronic devices M1-M5 can communicate with the host 120 through the electronic device EP7.

In summary, the electronic devices M1-M5 have the male connectors and the female connectors, such that one of the electronic devices M1-M5 do not need additional connectors (or cables), and the electronic devices M1-M5 can be overlapped each other. In addition, the electronic devices M1-M5 are hot-plug devices in the daisy-chain configuration, so that it is more convenient for users to assemble the electronic devices.

The foregoing has outlined features of several embodiments so that those skilled in the art may better understand the detailed description that follows. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions and alterations herein without departing from the spirit and scope of the present disclosure.

## Claims

1. An electronic device, comprising:
a printed circuit board, having at least one functional circuit;
a male connector, coupled to the printed circuit board; and
a female connector, coupled to the printed circuit board and mated with the male connector,
wherein the electronic device is coupled to another electronic device in a daisy-chain configuration.

2. The electronic device as claimed in claim 1, wherein the male connector and the female connector are compatible with thunderbolt interfaces.

3. The electronic device as claimed in claim 2, wherein the printed circuit board comprises a bridge circuit bridging first transmission interfaces, compatible with the thunderbolt interfaces, and second transmission interfaces different from the thunderbolt interfaces.

4. The electronic device as claimed in claim 2, wherein the second transmission interfaces, different from the thunderbolt interfaces, comprise high definition multimedia interfaces, digital visual interfaces, video graphics array interfaces, network interface, universal serial bus interfaces and/or audio interfaces.

5. The electronic device as claimed in claim 1, wherein the male connector is mated with another female connector of another electronic device, and the female connector is mated with another male connector of another electronic device.

6. The electronic device as claimed in claim 1, wherein the functional circuit is a graphics processing unit, a central processing unit, a storage unit, a TV box processing unit and/or an optical disk drive control unit.

7. The electronic device as claimed in claim 1, further comprising a housing, having a first side and a second side, wherein the male connector is disposed in a protrusion of the first side, the female connector is disposed in a recess of the second side, and the protrusion is mated with the recess, such that the male connector or the female connector is connected to another female connector or another male connector of another electronic device.

8. The electronic device as claimed in claim 7, wherein the printed circuit board is disposed in the housing, and is electrically connected to the male connector and the female connector.

9. An electronic system, comprising:
a first electronic device, having a first female connector, a first male connector and a first printed circuit board; and
a second electronic device, having a second female connector, a second male connector and a second printed circuit board, wherein the second male connector and the second female connector are respectively mated with the first female connector and the first male connector, such that the first printed circuit board communicates with the second printed circuit board with a daisy-chain configuration.

10. The electronic system as claimed in claim 9, further comprising:
an input output expander, having a third male connector and/or a third female connector, wherein the first male connector and the first female connector are respectively mated with the first female connector and the first male connector, such that the first electronic device and the second electronic device are sequentially overlapped in a direction from the input output expander.

11. The electronic system as claimed in claim 10, wherein the input output expander comprises a bridge circuit bridging first transmission interfaces, compatible with thunderbolt interfaces, and at least one second transmission interface different from the thunderbolt interfaces.

12. The electronic system as claimed in claim 11, wherein the second transmission interface, different from thunderbolt interfaces, comprise high definition multimedia interfaces, digital visual interfaces, video graphics array interfaces, network interface, universal serial bus interfaces and/or audio interfaces.

13. The electronic system as claimed in claim 9, wherein the first electronic device and the second device respectively have a protrusion and a recess, wherein the protrusion is mated with the recess, such that the first female connector, disposed in the recess, is electrically connected to the second male connector disposed in the protrusion.

14. The electronic system as claimed in claim 9, wherein the printed circuit board is a graphics processing unit, a central processing unit, a storage unit, a TV box processing unit and/or an optical disk drive control unit.
